# EUROPÄISCHE PATENTSCHRIFT

(11) **EP 3 304 627 B1**
(45) Veröffentlichungstag und Bekanntmachung des Hinweises auf die Patenterteilung: **07.11.2018**
(21) Anmeldenummer: 16726293.0
(22) Anmeldetag: 19.05.2016
(51) Int. Cl.: H01M 8/04029, H01M 8/04119, H01M 8/04291, B63G 8/08, H01M 8/04089

(54) **BRENNSTOFFZELLE MIT BEFEUCHTER**
FUEL CELL WITH HUMIDIFIER
PILE A COMBUSTIBLE AVEC HUMIDIFICATEUR

(30) Priorität: 28.05.2015 DE 102015209802
(43) Veröffentlichungstag der Anmeldung: 11.04.2018
(73) Patentinhaber: ThyssenKrupp Marine Systems GmbH, 24143 Kiel (DE); thyssenkrupp AG, 45143 Essen (DE)
(72) Erfinder: KRUMMRICH, Stefan, 24634 Padenstedt (DE); POMMER, Hans, 24360 Barkelsby (DE)
(74) Vertreter: thyssenkrupp Intellectual Property GmbH
(86) Internationale Anmeldenummer: PCT/EP2016/061252
(87) Internationale Veröffentlichungsnummer: WO 2016/188851

(56) Entgegenhaltungen:
- WO-A2-2005/064730
- AT-A1- 501 963
- JP-A- 2000 058 092

## Beschreibung

Die Erfindung betrifft eine Brennstoffzellenvorrichtung mit wenigstens einem Befeuchter, sowie ein Unterseeboot mit einer entsprechenden Brennstoffzelle. Ferner betrifft die Erfindung ein Verfahren zum Betreiben einer Brennstoffzellenvorrichtung mit einem Befeuchter, sowie die Durchführung des Verfahrens auf einem Unterseeboot

Aus der EP 2 840 636 A1 ist eine Brennstoffzelle mit Zirkulationsbetrieb bekannt, bei welcher eine Inertgasentsorgung erfolgt.

Aus der WO 2010/056829 A2 ist ein Verfahren zur Abtrennung von Komponenten aus einem Gasstrom bekannt.

Aus der EP 2 687 282 A1 ist ein Verfahren zum Abscheiden von Wasserstoff aus einem wasserstoffhaltigen Gasgemisch in einer Membran mit hohem Spülgasdruck bekannt.

Aus der US 2007/0065711 A1 ist ein Brennstoffzellenmodul mit einem Wasserabscheider bekannt.

Aus der DE 696 02 805 T2 ist eine Brennstoffzelle mit einer Gas-Flüssigkeit-Gemischeinheit und einer Gas-Flüssigkeit-Trennvorrichtung bekannt.

Aus der DE 43 18 818 C2 ist eine Vorrichtung zur Bereitstellung von Prozeßluft für den Betrieb luftatmender Brennstoffzellensysteme bekannt.

Aus der DE 603 13 309 T2 ist ein Brennstoffzellensystem mit einem Luftbefeuchter und einem Gas-Flüssigkeits-Abscheider bekannt.

Aus der AT 501 963 A1 ist ein Brennstoffzellensystem mit einer Rezirkulationseinrichtung bekannt.

Aus der WO 2005/064730 A2 ist eine Brennstoffzelle mit einem Rezirkulationskreis bekannt.

Aus der JP 2000-58092 A ist ein Brennstoffzellensystem mit einer Wassereinspritzung und Befeuchtern bekannt.

Inertgase sind Gase, welche innerhalb der Brennstoffzelle nicht umgesetzt werden, sich inert verhalten. Die wichtigsten Inertgase sind Stickstoff (N₂) und Argon (Ar). Weitere sind beispielsweise Helium (He) oder Neon (Ne). Weitere Inertgase können die schwereren Edelgase oder auch nicht reaktive Halogenkohlenwasserstoffe sein.

Brennstoffzellen werden heute in Bereichen eingesetzt, in welchen die Verwendung klassischer Generatoren (auf Verbrennungsbasis) oftmals nicht oder nur eingeschränkt möglich ist. Beispielsweise werden Brennstoffzellen in Unterseebooten zur Energieversorgung in außenluftunabhängigen Antriebsystemen eingesetzt. Für diese Anwendungen ist es positiv, wenn die Brennstoffzellenvorrichtungen kompakt, robust und in sich geschlossen aufgebaut sind.

Als Edukte für den Betrieb einer Brennstoffzelle werden regelmäßig Sauerstoff, oftmals gespeichert als flüssiger Sauerstoff, und Wasserstoff, oftmals gespeichert als Metallhydrid, eingesetzt. Alternativ können Sauerstoff und Wasserstoff unter hohem Druck gespeichert. All diesen Quellen ist gemein, dass die Edukte praktisch wasserfrei sind. Weiter kann der Wasserstoff auch in einen Reformer aus anderen Verbindungen hergestellt werden.

Insbesondere bei der Verwendung von Polymerelektrolytmembran (PEM) Brennstoffzellen ist es jedoch notwendig, dass die Eduktgase eine hohe Feuchte bei der Betriebstemperatur der Brennstoffzelle aufweisen, um die Stabilität der Membran und damit die Lebensdauer der Brennstoffzelle zu gewährleisten.

Aufgabe der Erfindung ist es, den Feuchtegehalt der Edukte in einfacher und zuverlässiger Weise zu regulieren.

Gelöst wird diese Aufgabe durch eine Brennstoffzellenvorrichtung mit den in Anspruch 1 angegebenen Merkmalen, dem Verfahren zum Betreiben einer Brennstoffzelle mit den in Anspruch 9 angegebenen Merkmalen, einem Unterseeboot mit den in Anspruch 12 angegebenen Merkmalen sowie der Durchführung des Verfahrens mit den in Anspruch 13 angegebenen Merkmalen. Vorteilhafte Weiterbildungen ergeben sich aus den Unteransprüchen, der nachfolgenden Beschreibung sowie den Zeichnungen.

Die erfindungsgemäße Brennstoffzellenvorrichtung weist wenigstens eine Brennstoffzelle, wenigstens einen ersten Wasserabscheider, eine erste Eduktzuführung und wenigstens einen ersten Befeuchter auf. Die Brennstoffzelle weist eine Eingangsseite und eine Ausgangsseite sowie eine Anodenseite und eine Kathodenseite auf. Die erste Eduktzuführung ist mit dem ersten Befeuchter verbunden und der erste Befeuchter mit der Eingangsseite der Brennstoffzelle verbunden. Die Ausgangseite der Brennstoffzelle ist mit dem ersten Wasserabscheider verbunden. Die Vorrichtung weist eine erste Wasserfördervorrichtung auf, welche Wasser aus dem ersten Wasserabscheider in den ersten Befeuchter fördert. Weiter ist der erste Befeuchter außerhalb der kathodenseitigen Verbindung angeordnet.

Die Verwendung von Wasser aus dem ersten Wasserabscheider für den ersten Befeuchter ist für die Vorrichtung sehr vorteilhaft. Durch den Produktgasstrom wird der erste Wasserabscheider in erster Näherung auf der Temperatur der Ausgangsseite der Brennstoffzelle gehalten. Durch die bei der Reaktion freiwerdende Wärme ist die Ausgangsseite der Brennstoffzelle wärmer als die Eingangsseite der Brennstoffzelle. Die Edukte werden vorteilhafter Weise auf die Temperatur an der Eingangsseite der Brennstoffzelle erwärmt. Somit ist das dem ersten Befeuchter zugeführte Wasser des ersten Wasserabscheiders wärmer als das Eduktgas. Hierdurch stellt das Wasser auch die notwendige Energie zur Verdampfung des Wassers in den Eduktgasstrom zur Verfügung ohne diesen abzukühlen. Zusätzlich kann ein kälterer Eduktgasstrom auch durch das Wasser zusätzlich auf die Zieltemperatur erwärmt werden.

Dass der erste Befeuchter außerhalb der kathodenseitigen Verbindung angeordnet ist, hat den großen Vorteil, dass es in der kathodenseitigen Verbindung zu keinem zusätzlichen Druckverlust kommt, welcher kompensiert werden muss. Da der aus der Ausgangsseite der Brennstoffzelle austretende Gasstrom bereits mit Wasser gesättigt ist, besteht auch keine Notwendigkeit, den ersten Befeuchter innerhalb der kathodenseitigen Verbindung anzuordnen. Somit muss in der kathodenseitigen Verbindung lediglich der Druckverlust, welcher innerhalb der Brennstoffzelle auftritt, kompensiert werden.

In einer weiteren Ausführungsform der Erfindung weist die erste Wasserfördervorrichtung einen ersten Wärmetauscher auf. Besonders bevorzugt wird der erste Wärmetauscher mit Kühlwasser der Brennstoffzelle erwärmt.

Diese Ausführungsform ist besonders vorteilhaft, da hierdurch die Temperatur des Wassers auf die Temperatur an der Ausgangsseite der Brennstoffzelle gebracht werden kann, ohne dass zusätzliche Energie aufgewendet werden muss. Gleichzeitig wird ein Teil der in der Brennstoffzelle erzeugte Wärme effizient abgeführt. Hierdurch ist ein besonders kompaktes, robustes und größtenteils in sich geschlossenes System möglich.

Erfindungsgemäß ist die Brennstoffzellenvorrichtung als Rezirkulationsbrennstoffzellenvorrichtung ausgeführt. Erfindungsgemäß weist die Vorrichtung eine kathodenseitige Verbindung auf, wobei die kathodenseitige Verbindung eine Verbindung zwischen der Ausgangsseite der Kathodenseite der Brennstoffzelle und der Eingangsseite der Kathodenseite der Brennstoffzelle ist. Die Vorrichtung weist ferner eine anodenseitige Verbindung auf, wobei die anodenseitige Verbindung eine Verbindung zwischen der Ausgangsseite der Anodenseite der Brennstoffzelle und der Eingangsseite der Anodenseite der Brennstoffzelle ist. Erfindungsgemäß ist in der kathodenseitigen Verbindung der erste Wasserabscheider angeordnet ist, da das in der Brennstoffzelle anfallende Wasser üblicherweise mit dem Kathodengasstrom ausgetragen wird.

Die Verwendung einer Rezirkulationsbrennstoffzellenvorrichtung hat eine Reihe von Vorteilen. Zum einen werden nicht verbrauchte Edukte dem Prozess wieder zugeführt, sodass die Ausbeute des Gesamtprozesses insgesamt gesteigert werden kann. Zum anderen kann durch den höheren Gasstrom durch die Zelle das entstehende Wasser zuverlässiger ausgetragen werden.

In einer weiteren Ausführungsform der Erfindung ist zwischen dem erste Befeuchter und dem ersten Wasserabscheider eine Wasserrückführung angeordnet. Auf diese Weise kann zum einen ein Wasserüberschuss abgeführt werden, zum anderen kann auch durch den Verdampfungsprozess abgekühltes Wasser entfernt und durch wärmeres ersetzt werden. Durch den Wasserkreislauf kann dieses Wasser auch erneut dem ersten Befeuchter wieder zugeführt werden.

In einer weiteren Ausführungsform der Erfindung weist der erste Befeuchter eine wasserdurchlässige Membran auf, besonders bevorzugt ist, dass der erste Befeuchter eine Membran aus sulfoniertem Tetrafluorethylen-Polymer aufweist.

In einer weiteren Ausführungsform der Erfindung ist der erste Befeuchter als Wasserbad ausgeführt.

Erfindungsgemäß weist die Vorrichtung einen zweiten Befeuchter auf. Beispielsweise durchläuft der Sauerstoff den ersten Befeuchter auf der Kathodenseite und der Wasserstoff den zweiten Befeuchter auf der Anodenseite. Hierdurch werden beide Eduktströme befeuchtet.

In einer weiteren Ausführungsform der Erfindung weist die Vorrichtung eine zweite Wasserfördervorrichtung auf, welche Wasser aus dem ersten Wasserabscheider in den zweiten Befeuchter fördert. Alternativ oder zusätzlich kann die Vorrichtung eine dritte Wasserfördervorrichtung aufweisen, welche Wasser aus dem zweiten Wasserabscheider in den zweiten Befeuchter fördert. Selbstverständlich sind auch weitere Ausführungsformen denkbar, beispielsweise kann das Wasser aus dem ersten Wasserabscheider und dem zweiten Wasserabscheider zusammengeführt werden und dann durch einen gemeinsamen Wärmetauscher geleitet und auf den ersten Befeuchter und den zweiten Befeuchter verteilt werden. Hierdurch wird der Aufbau vereinfacht, da nur ein Wärmeaustauscher benötigt wird. Außerdem kann das System mit nur einer Fördereinheit, beispielsweise einer Pumpe, in Kombination mit entsprechenden Regelventilen auskommen, wodurch Geräuschemissionen verringert werden können.

Eine beispielhafte Rezirkulationsbrennstoffzellenvorrichtung weist wenigstens eine Brennstoffzelle, einen ersten Einlass für Sauerstoff, einen zweiten Einlass für Wasserstoff und einen ersten Wasserabscheider auf. Die Brennstoffzelle weist eine Eingangsseite und eine Ausgangsseite sowie eine Anodenseite und eine Kathodenseite auf. Auf der Eingangsseite werden die Edukte (Sauerstoff und Wasserstoff) der Brennstoffzelle zugeführt, auf der Ausgangseite wird das Produkt (Wasser) abgeführt. Auf der Anodenseite erfolgt die Oxidation von Wasserstoff (H₂) zu Protonen (H⁺), auf der Kathodenseite die Reduktion von Sauerstoff (O₂) zu Oxid (O²⁻), wobei durch Leitung der Protonendurch die Membran Wasser (H₂O) entsteht. Der erste Einlass für Sauerstoff ist mit der Eingangsseite der Kathodenseite der Brennstoffzelle verbunden und der zweite Einlass für Wasserstoff ist mit der Eingangsseite der Anodenseite der Brennstoffzelle verbunden. Die Vorrichtung weist eine kathodenseitige Verbindung auf, wobei die kathodenseitige Verbindung eine Verbindung zwischen der Ausgangsseite der Kathodenseite der Brennstoffzelle und der Eingangsseite der Kathodenseite der Brennstoffzelle ist. Die Vorrichtung weist weiter eine anodenseitige Verbindung auf, wobei die anodenseitige Verbindung eine Verbindung zwischen der Ausgangsseite der Anodenseite der Brennstoffzelle und der Eingangsseite der Anodenseite der Brennstoffzelle ist. Die kathodenseitige Verbindung dient zur Rezirkulation des in der Brennstoffzelle nicht umgesetzten Sauerstoffs, die anodenseitige Verbindung zur Rezirkulation des in der Brennstoffzelle nicht umgesetzten Wasserstoffs. In der kathodenseitigen Verbindung ist der erste Wasserabscheider angeordnet. Der Wasserabscheider dient zur Abscheidung des in der Brennstoffzelle entstehenden Wassers und entfernt dieses aus dem Kreislauf. Die Vorrichtung weist an der Ausgangsseite der Kathodenseite der Brennstoffzelle ein Ablassventil auf. Über das Ablassventil kann ein Teil des an der Ausgangsseite der Kathodenseite der Brennstoffzelle austretenden Kathodengasstroms abgelassen und so aus dem Kreislauf entfernt werden. Über diesen Ablass ist es insbesondere möglich, die mit dem Sauerstoff eingebrachten Inertgase, welche als Verunreinigung im Sauerstoff enthalten sind, aus dem Kreislauf zu entfernen und so einen Druckanstieg und eine Verschlechterung des Wirkungsgrads der Brennstoffzelle zu vermeiden. Hierbei kann die Konzentration an Inertgas im Kathodengasstroms durch die Menge des über das Ablassventil abgegebenen Anteils gezielt eingestellt werden.

Besonders bevorzugt handelt es sich bei der Brennstoffzelle um eine Polymerelektrolytmembran-Brennstoffzelle (PEM-Brennstoffzelle). Besonders bevorzugt wird ein sulfoniertes Tetrafluorethylen-Polymer, beispielsweise Nafion (DuPont) oder Flemion (Asahi), als Polymerelektrolytmembran verwendet.

Bei der Brennstoffzelle kann es sich um eine einzelne Brennstoffzelle, eine Parallelschaltung mehrerer einzelner Brennstoffzellen oder einen sogenannten Stack, eine Hintereinanderschaltung mehrerer einzelner, getrennter Brennstoffzellen handeln.

Optional kann die beispielhafte Rezirkulationsbrennstoffzellenvorrichtung einen zweiten Wasserabscheider aufweisen, wobei der zweite Wasserabscheider in der anodenseitigen Verbindung angeordnet ist. Diese Ausführungsform ist besonders bevorzugt. Insbesondere bei Verwendung einer PEM-Brennstoffzelle ist es vorteilhaft, die Edukte mit Wasser anzureichern, um eine Verlängerung der Lebensdauer der Membran zu erreichen. Weiter besteht die Möglichkeit der Diffusion von Wasser durch bestimmte Membranen. Zur Einstellung der Wassermenge im Anodengasstrom kann vorzugsweise daher der zweite Wasserabscheider vorgesehen sein.

In einer weiteren Ausführungsform der Erfindung ist die Vorrichtung zur vollständigen Rezirkulierung des an der Ausgangsseite der Anodenseite der Brennstoffzelle austretenden Anodengases ausgebildet. Durch die vollständige Rezirkulierung des an der Ausgangsseite der Anodenseite der Brennstoffzelle austretenden Anodengases kann eine Wasserstoffemission vermieden werden. Dadurch kann auf eine der Rezirkulationsbrennstoffzellenvorrichtung nachgelagerte Wasserstoffoxidationsvorrichtung verzichtet werden. Zusätzlich wird der Wasserstoff vollständig umgesetzt, wodurch Verluste vermieden werden können. Da die Speicherung von Wasserstoff sehr aufwändig ist, ist die vollständige Nutzung und Umsetzung des gespeicherten Wasserstoffs besonders vorteilhaft.

In einer weiteren Ausführungsform der Erfindung ist das Ablassventil auf der Kathodenseite ein Drosselventil. Die Verwendung eines Drosselventils ermöglicht es, einen vergleichsweise kleinen Anteil des Kathodengasstroms abzutrennen und an die Umgebungsluft abzugeben. Hierdurch ist eine vergleichsweise einfache und nicht aktiv geregelte Abgabe des Inertgases an die Umgebungsluft möglich.

In einer weiteren Ausführungsform der Erfindung weist die Vorrichtung einen ersten Sauerstoffsensor auf, wobei der erste Sauerstoffsensor die Sauerstoffkonzentration der Umgebungsluft detektiert. Steigt die Sauerstoffkonzentration in der Umgebungsluft über einen kritischen Grenzwert an, so kann die über das Ablassventil abgegebene Menge des Kathodengasstroms reduziert werden. Hierdurch erhöht sich zwar die Konzentration an Inertgas in der Brennstoffzelle und der Wirkungsgrad der Brennstoffzelle reduziert sich. Jedoch wird dadurch auch bewirkt, dass nach Einstellung eines neuen Gleichgewichts bei gleicher Abgabe von Inertgas die Abgabe von Sauerstoff sich durch die geringere Konzentration von Sauerstoff im Kathodengasstrom reduziert und so die Sauerstoffkonzentration in der Umgebungsluft unterhalb eines Schwellenwerts von 15% bis 25%, besonders bevorzugt unterhalb von 21%, ganz besonders bevorzugt unter einem für Menschen gefährlichem Schwellenwert gehalten werden kann.

In einer weiteren Ausführungsform der Erfindung weist die Vorrichtung einen zweiten Sauerstoffsensor auf, wobei der zweite Sauerstoffsensor die Sauerstoffkonzentration an der Ausgangsseite der Kathodenseite der Brennstoffzelle detektiert. Die Verwendung des zweiten Sauerstoffsensors ist vorteilhaft, um die Brennstoffzellenvorrichtung mit einer optimalen Inertgaskonzentration zu betreiben. Hierbei ergibt sich das Optimum aus einer möglichst geringen Inertgaskonzentration für den Wirkungsgrad, einer möglichst hohen Inertgaskonzentration für die Minimierung der Sauerstoffemission und einer möglich konstanten Inertgaskonzentration für die Optimierung der Lebensdauer der Brennstoffzelle und eine konstante Leistungsabgabe der Brennstoffzelle. Mit Hilfe des zweitens Sauerstoffsensors kann die Sauerstoffkonzentration im Kathodengasstrom gezielt eingestellt werden, wobei sich eine Konzentration von 40 bis 70 mol-%, bevorzugt von 45 bis 60 mol-%, als optimal erwiesen hat.

Die Eduktgase werden üblicherweise praktisch trocken gelagert, also mit einem Feuchtegehalt (relative Feuchte) von praktisch 0 %. Übliche Speicherformen wie flüssiger Sauerstoff, Wasserstoff aus einem Metallhydridspeicher oder auch Wasserstoff oder Sauerstoff aus einem Druckgastank weisen praktisch durch die Art der Lagerung keine Feuchte auf. Die Membran der Brennstoffzelle weist jedoch beim Betrieb mit nicht ausreichend befeuchteten Edukten eine verkürzte Lebensdauer auf. Daher ist es vorteilhaft, die Edukte zu befeuchten, besonders bevorzugt den Wassergehalt praktisch zu sättigen, also einen Feuchtegehalt (relative Feuchte) von 80 bis 100 %, besonders bevorzugt von 90 bis 100 % einzustellen.

In einer weiteren Ausführungsform der Erfindung weist die Vorrichtung die Vorrichtung einen Vorratsbehälter für flüssigen Sauerstoff auf. Flüssiger Sauerstoff hat sich als besonders effizient erwiesen. Bevorzugt wird der gasförmige Sauerstoff mittels eines Verdampfers und eines Überhitzers aus dem flüssigen Sauerstoff gewonnen.

In einer weiteren Ausführungsform der Erfindung weist die Vorrichtung einen Metallhydridspeicher für Wasserstoff auf. Wasserstoff, welcher aus einem Metallhydridspeicher gewonnen wird, weist (nahezu) keine Inertgase auf. Hierdurch wird der Betrieb der Brennstoffzelle vereinfacht. Außerdem ist der als Metallhydrid gelagerte Wasserstoff im Vergleich zu unter Druck stehendem Wasserstoff oder flüssigem Wasserstoff einfacher auf einem Unterseeboot zu lagern.

Alternativ oder zusätzlich zu einem Wasserstoffspeicher weist die Vorrichtung einen Reformer auf, der die Edukte aus anderen Ausgangsstoffen herstellt. Hierdurch ist es möglich die Edukte in sicherer oder einfacher zu lagernden Formen auf einem Unterseeboot mitzuführen und erst dann herzustellen, wenn sie benötigt werden.

In einer weiteren Ausführungsform der Erfindung weist die die kathodenseitige Verbindung einen kathodenseitige Verdichter und die anodenseitige Verbindung einen anodenseitige Verdichter auf. Die Verdichter dienen der Kompensation der Druckverluste in der Brennstoffzelle. Besonders bevorzugt sind die Verdichter jeweils hinter den mit Kühlwasser beheizten Wasserabscheidern angeordnet. Durch diese Anordnung wird ein Kondensieren innerhalb der Verdichter vermieden. Weiter bevorzugt erfolgt eine Absenkung der Temperatur des rezirkulierten Gasstroms innerhalb des Wasserabscheiders von der Temperatur welche der Gasstrom am der Ausgangsseite der Brennstoffzelle aufweist auf die Temperatur, welche der Gasstrom an der Eingangsseite der Brennstoffzelle aufweist. Da bei der Reaktion innerhalb der Brennstoffzelle Wärme entsteht, heizt sich der Gasstrom innerhalb der Brennstoffzelle auf und erzeugt so den Temperaturgradienten. Da die Gase vorzugsweise eine relative Feuchte nahe 100 % aufweisen, würde es bei einer Absenkung der Temperatur in der anodenseitigen bzw. kathodenseitigen Verbindung zur Kondensation kommen.

In einer weiteren Ausführungsform der Erfindung weist die Brennstoffzellenvorrichtung einen dritten Einlass auf, wobei der dritte Einlass mit der Eingangsseite der Anodenseite der Brennstoffzelle verbunden ist und wobei Inertgas durch den dritten Einlass zugeführt werden kann. Gerade zum in Betrieb nehmen der Brennstoffzelle ist es vorteilhaft, die gewünschte Inertgaskonzentration durch Zugabe von Inertgas direkt einzustellen. Dieses ist besonders vorteilhaft, da die Dichte des Anodengases sich mit der Zusammensetzung stark ändern kann, beispielsweise von reinem Wasserstoff zu beispielsweise einem Gemisch aus 50 % Wasserstoff und 50 % Argon verzehnfacht sich die Dichte in etwa. Hierdurch werden die fluiden Eigenschaften, zum Beispiel das Verhalten innerhalb eines Verdichters stark beeinflusst. Daher ist die Zugabe von Inertgas für gleichbleibende Bedingungen der Rezirkulationslüfter vorteilhaft.

In einer weiteren Ausführungsform der Erfindung weist die Brennstoffzellenvorrichtung einen vierten Einlass auf, wobei der vierte Einlass mit der Eingangsseite der Kathodenseite der Brennstoffzelle verbunden ist und wobei Inertgas durch den vierten Einlass zugeführt werden kann. Auch auf der Kathodenseite ist es vorteilhaft, beim Einfahren der Brennstoffzelle Inertgas zuzugeben. Zwar ändern sich auf der Kathodenseite die Dichte und damit die fluiden Eigenschaften des Kathodengases nicht so stark, jedoch führt ein erhöhter Anteil an Inertgas zu einem veränderten Potential der Kathodenseite der Brennstoffzelle durch den veränderten Partialdruck des Sauerstoffs. Um einen möglichst konstanten Betrieb zu ermöglichen und somit eine maximale Lebensdauer für die Brennstoffzelle zu erreichen, ist die Zugabe von Inertgas auch auf der Kathodenseite vorteilhaft.

In einem weiteren Aspekt betrifft die Erfindung ein Verfahren zum Betreiben einer Brennstoffzellenvorrichtung, wobei das Verfahren die folgenden Verfahrensschritte aufweist.
a) Einleiten eines Eduktgases in die Brennstoffzellenvorrichtung
b) Befeuchten eines Eduktgases in einem ersten Befeuchter in der Brennstoffzellenvorrichtung
c) Reaktion des Eduktgases in der Brennstoffzelle,
d) Abscheiden von Wasser aus dem Produktgasstrom in einem ersten Wasserabscheider.
Zum Befeuchten in Schritt b) wird das in Schritt d) abgeschiedenes Wasser verwendet.

Der Vorteil der Verwendung des in Schritt d) abgeschiedenen Wassers ist, dass dessen Wärme, welche durch die Ausgangstemperatur an der Ausgangsseite der Brennstoffzelle erhöht ist, Energie zur Verdampfung bereit stellt und so den Produktstrom einfach und effizient zu befeuchten in der Lage ist.

In einer weiteren Ausführungsform der Erfindung wird zum Aufheizen des Wassers die Abwärme der Brennstoffzelle verwendet. Besonders bevorzugt wird das Kühlwasser der Brennstoffzelle durch einen Wärmetauscher geleitet, welcher das vom ersten Wasserabscheider abgeschiedene Wasser erwärmt. Somit ist sichergestellt, dass das Wasser im ersten Befeuchter genügend Wärme zur Verdunstung zur Verfügung stellen kann. Durch die Prozessführung, dass die Abwärme der Brennstoffzelle somit für die Befeuchtung genutzt wird, kann das Verfahren energetisch optimiert gefahren werden. Besonders bevorzugt kann das Verfahren vollständig passiv geregelt werden.

In einer weiteren Ausführungsform der Erfindung wird das Kathodengas und wobei Anodengas rezirkuliert wird. Ein Teil des Kathodengasstroms wird an der Ausgangsseite der Kathodenseite der Brennstoffzelle aus der Rezirkulation entfernt und an die Umgebungsluft abgegeben. Der Anodengasstrom wird vollständig rezirkuliert.

Durch das vollständige Rezirkulieren des Anodengasstroms wird die Abgabe von Wasserstoff an die Umgebung vermieden, was eine Reihe von Vorteilen aufweist. Zum einen wird die Abgabe von potentiell gefährlichem Wasserstoff (Gefahr der Knallgasbildung) vermieden. Zum anderen kann auf gesonderte Vorrichtung zur gezielten Oxidation des an die Umgebungsluft abgegebenen Wasserstoffs verzichtet werden. Und weiter wird dadurch der Wasserstoff vollständig umgesetzt. Wird gespeicherter Wasserstoff verwendet, so ist dieses besonders wichtig, da Sauerstoff vergleichsweise einfach, beispielsweise als flüssiger Sauerstoff gespeichert werden kann. Bei Wasserstoff ist die Speicherung aufgrund der geringen Dichte und der hohen Brennbarkeit aufwändig und schwierig, weshalb es vorteilhaft ist, den Wasserstoff vollständig umzusetzen.

In einer weiteren Ausführungsform der Erfindung wird die Abgabe des Teils des Kathodengasstroms derart geregelt, dass durch die Abgabe des Teils des Kathodengasstroms die Sauerstoffkonzentration in der Umgebungsluft einen Wert von 21 mol-% +/-5% nicht übersteigt. Durch die Überwachung der Sauerstoffkonzentration in der Umgebungsluft und die aktive Regelung der Abgabe des Teils des Kathodengasstroms kann eine Gefährdung in der Umgebung der Rezirkulationsbrennstoffzellenvorrichtung insbesondere für Menschen optimal reduziert werden.

In einer weiteren Ausführungsform der Erfindung wird die Menge des mit dem Teil des Kathodengasstroms abgegebenen Sauerstoffs über die Inertgaskonzentration an der Ausgangsseite der Kathodenseite der Brennstoffzelle eingestellt.

In einer weiteren Ausführungsform der Erfindung wird die Inertgaskonzentration an der Ausgangsseite der Kathodenseite der Brennstoffzelle zur Reduktion des mit dem Teil des Kathodengasstroms abgegebenen Sauerstoffs erhöht.

Durch die Reduktion der Abgabe des Teils des Kathodengasstroms wird die Abgabe von Inertgas reduziert, sodass durch den Sauerstoff über dessen Verunreinigung mehr Inertgas in den Kreislauf eingetragen als ausgetragen wird. Hierdurch erhöht sich die Inertgaskonzentration, bis durch die erhöhte Inertgaskonzentration bei der reduzierten Menge des Teils des Kathodengasstroms die gleiche Menge an Inertgas abgegeben wie eingetragen wird. Hierdurch wird der Sauerstoffaustrag reduziert.

Entsprechend kann durch Erhöhen des Teils des Kathodengasstroms die Konzentration an Inertgas erniedrigt und somit die Abgabe von Sauerstoff an die Umgebung erhöht werden.

In einer weiteren Ausführungsform der Erfindung wird die Inertgaskonzentration an der Ausgangsseite der Kathodenseite der Brennstoffzelle auf 40 bis 70 mol-%, bevorzugt auf 45 bis 60 mol-%, besonders bevorzugt auf 45 bis 55 mol-% eingestellt. Dieser Bereich ist, wie zum Beispiel der EP 2 840 636 A1 zu entnehmen, nicht bevorzugt, da es in diesem Bereich schon zu einer Beeinträchtigung der Leistung der Brennstoffzelle kommt. Dennoch hat dieser Bereich sich erfindungsgemäß als vorteilhaft erwiesen, da hierdurch eine konstante Abführung von Inertgas bei einer vergleichsweise geringen Abgabe von Sauerstoff an die Umgebung möglich ist. Bei einem typischen Gehalt von 0,5 % Inertgasanteil bim Sauerstoff (technische Reinheit, 99,5 %) ergibt sich, dass somit ein Anteil von etwa 0,5 % des eingesetzten Sauerstoffs an die Umgebungsluft gegeben werden und somit auch für die Energiegewinnung verloren gehen.

In einer weiteren Ausführungsform der Erfindung werden die Inertgaskonzentration an der Ausgangsseite der Kathodenseite der Brennstoffzelle und die Inertgaskonzentration an der Ausgangsseite der Anodenseite der Brennstoffzelle gleich eingestellt. Gleiche Inertgaskonzentrationen sind besonders bevorzugt, da über die Membran, welche die Anodenseite von der Kathodenseite der Brennstoffzelle trennt, insbesondere im Fall einer PEM-Brennstoffzelle, auch Inertgas diffundieren kann. Durch diese Diffusion ist ein Gleichgewicht nur bei gleichen Inertgaskonzentrationen gegeben. Je stärker die Abweichung von Gleichgewicht ist, umso mehr Prozesse laufen innerhalb der Brennstoffzelle ab, um das Gleichgewicht einzustellen. In einer weiteren Ausführungsform der Erfindung wird das rezirkulierte Kathodengas und dass das rezirkulierte Anodengas verdichtet. Durch das Verdichten der rezirkulierenden Gas wird der Druckverlust innerhalb der Brennstoffzelle ausgeglichen. Besonders einfach kann die Verdichtung des rezirkulierten Anodengases erfolgen, wenn dieses einen hohen Inertgasteil, vorzugsweise 40 bis 70 mol-%, bevorzugt auf 45 bis 60 mol-%, besonders bevorzugt auf 45 bis 55 mol-% aufweist, da hierdurch das Anodengas eine vergleichsweise hohe Dichte aufweist, welche technisch einfacher zu verdichten ist. Insbesondere kann durch den hohen Inertgasanteil eine annähernd konstante Dichte realisiert werden, was zu variationsarmen Prozessbedingungen führt.

In einer weiteren Ausführungsform der Erfindung wird die Stoffmenge an Inertgas, welche mit dem Teil des Kathodengasstroms an der Ausgangsseite der Kathodenseite der Brennstoffzelle aus der Rezirkulation entfernt und an die Umgebungsluft abgegeben wird, gleich der Stoffmenge an Inertgas gewählt, welche der Rezirkulationsbrennstoffzellenvorrichtung über Einlass an Sauerstoff zugeführt wird. Dieses entspricht dem stationären Zustand.

In einem weiteren Aspekt betrifft die Erfindung ein Unterseeboot mit einer erfindungsgemäßen Brennstoffzellenvorrichtung. Die erfindungsgemäße Brennstoffzellenvorrichtung ist besonders vorteilhaft für ein Unterseeboot. Durch die Verwendung des abgeschiedenen Wassers zur Befeuchtung der Edukte ist die Brennstoffzellenvorrichtung besonders kompakt und robust und somit besonders für den Einsatz in einem Unterseeboot geeignet.

Besonders bevorzugt handelt es sich um ein Unterseeboot mit einer Rezirkulationsbrennstoffzelle.

In einem weiteren Aspekt betrifft die Erfindung die Durchführung des erfindungsgemäßen Verfahrens auf einem Unterseeboot.

In einer besonders bevorzugten Ausführungsform der Erfindung wird das erfindungsgemäße Verfahren auf einem Unterseeboot derart durchgeführt, dass die durch die Abgabe des Teils des Kathodengasstroms abgegebene Sauerstoffmenge so eingestellt wird, dass diese der Sauerstoffmenge des Verbrauchs an Sauerstoff innerhalb des Unterseeboots entspricht oder unterschreitet.

Es hat sich herausgestellt, dass bei der Durchführung des erfindungsgemäßen Verfahrens auf einem Unterseeboot besonders bevorzugt die Inertgaskonzentration auf 40 bis 70 mol-%, bevorzugt auf 45 bis 60 mol-%, besonders bevorzugt auf 45 bis 55 mol-% eingestellt wird. Es hat sich herausgestellt, dass bei dieser Inertgaskonzentartion die durch die Brennstoffzelle abgegebene Energie in etwa der benötigten Energiemenge entspricht und gleichzeitig die abgegebene Sauerstoffmenge etwa der durch die Mannschaft verbrauchten Sauerstoffmenge entspricht. Da Energie- und Sauerstoffbedarf in erster Näherung mit der Boots- und damit Mannschaftsgröße skaliert, ist dieser Wert in grober Näherung unabhängig von der Bootsgröße.

Nachfolgend ist die erfindungsgemäße Brennstoffzellenvorrichtung anhand in den Zeichnungen dargestellter Ausführungsbeispiele näher erläutert.
Fig. 1 Schematische Darstellung einer ersten Brennstoffzellenvorrichtung
Fig. 2 Schematische Darstellung einer zweiten Rezirkulationsbrennstoffzellenvorrichtung

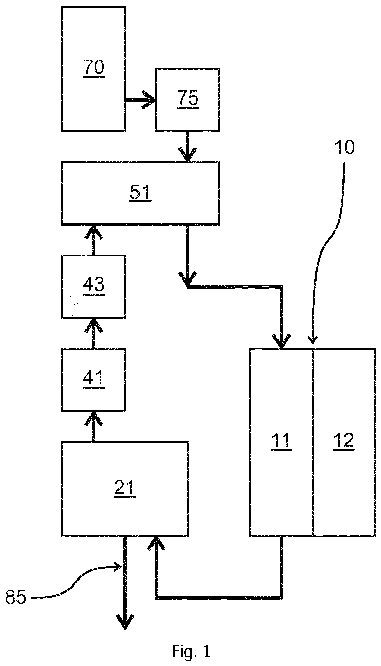

In Fig. 1 ist eine Brennstoffzellenvorrichtung schematisch dargestellt. Die Brennstoffzellenvorrichtung weist eine Brennstoffzelle 10 mit einer Kathodenseite 11 und einer Anodenseite 12 auf. An der Kathodenseite 11 erfolgt die Reduktion von O₂ zu O²⁻, an der Anodenseite 12 die Oxidation von H₂ zu H⁺. Das aus der Kathodenseite 11 der Brennstoffzelle 10 austretende Kathodengas wird in einen erster Wasserabscheider 21 geleitet, in welchem mitgeführtes Wasser flüssig abgeschieden wird. Der erste Wasserabscheider 21 weist einen Wasserablass 85 auf, um in der Brennstoffzelle 10 entstandenes Wasser abführen zu können. Wenigstens ein Teil des im ersten Wasserabscheiders 21 abgeschiedenen Wassers wird über einen Verdichter 41 und einen Wärmetauscher 43 in einen ersten Befeuchter 51 geführt. Der Verdichter 41 ist bevorzugt in Form einer Pumpe ausgeführt. Aus einem Sauerstofftank 70, beispielsweise für flüssigen Sauerstoff, wird Sauerstoff über einen Überhitzer 75 in den ersten Befeuchter 51 geleitet. Der Sauerstoff nimmt dort Wasser auf und wird in die Kathodenseite 11 der Brennstoffzelle 10 eingeleitet. Die weiteren Komponenten, insbesondere der Anodenteil wurde zur Vereinfachung weggelassen. Der Wärmetauscher 43 wird vorzugsweise mit dem Kühlwasser der Brennstoffzelle 10 betrieben, wodurch keine zusätzliche Energie in den ersten Verdampfer eingebracht werden muss.

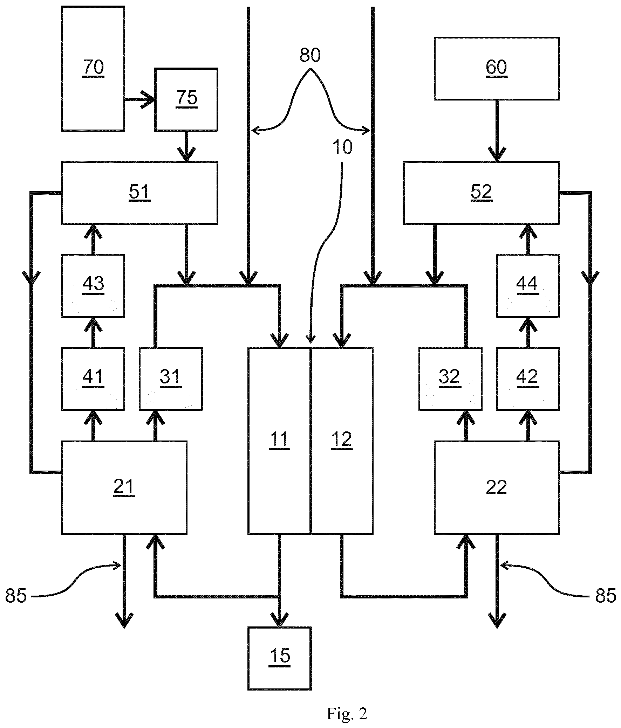

In Fig. 2 ist eine beispielhafte Rezirkulationsbrennstoffzellenvorrichtung schematisch dargestellt. Die Rezirkulationsbrennstoffzellenvorrichtung weist eine Brennstoffzelle 10 mit einer Kathodenseite 11 und einer Anodenseite 12 auf. An der Kathodenseite 11 erfolgt die Reduktion von O₂ zu O²⁻, an der Anodenseite 12 die Oxidation von H₂ zu H⁺. Das aus der Kathodenseite 11 der Brennstoffzelle 10 austretende Kathodengas wird über einen erster Wasserabscheider 21 und einen Verdichter 31 rezirkuliert. Das aus der Anodenseite 12 der Brennstoffzelle 10 austretende Anodengas wird über einen zweiten Wasserabscheider 22 und einen Verdichter 32 rezirkuliert. Über ein Ablassventil 15 wird ein Teil des Kathodengasstroms an die Umgebungsluft abgegeben. Aus dem ersten Wasserabscheider 21 und dem zweiten Wasserabscheider 22 kann Wasser über einen Wasserablass 85 aus dem Kreislauf entfernt werden.

Zur Zuführung neuer Edukte verfügt die Rezirkulationsbrennstoffzellenvorrichtung über einen Wasserstofftank 60 und einen Sauerstofftank 70, vorzugsweise für flüssigen Sauerstoff, über einen Überhitzer 75. Der Sauerstoff wird über einen ersten Befeuchter 51 in den Kathodenkreislauf eingebracht, der Wasserstoff über einen zweiten Befeuchter 52 in den Anodenkreislauf. Der erste Befeuchter 51 und der zweite Befeuchter 52 weisen vorzugsweise eine wasserdurchlässige Membran auf, vorzugsweise aus einem sulfonierten Tetrafluorethylen-Polymer, beispielsweise Nafion (DuPont) oder Flemion (Asahi). Der erste Befeuchter 51 wird über einen Verdichter 41 und einen Wärmetauscher 43 mit im ersten Wasserabscheider 21 abgeschiedenem Wasser versorgt. Der zweite Befeuchter 52 wird über einen Verdichter 42 und einen Wärmetauscher 44 mit im zweiten Wasserabscheider 22 abgeschiedenem Wasser versorgt. Der Verdichter 42 ist bevorzugt in Form einer Pumpe ausgeführt. Selbstverständlich sind auch alle anderen Kombinationen zur Versorgung der Befeuchter durch in den Wasserabscheidern abgeschiedenem Wasser denkbar, insbesondere, dass über den Verdichter 41 und den Wärmetauscher 43 der erste Befeuchter 51 und der zweite Befeuchter 52 mit in dem ersten Wasserabscheider 21 abgeschiedenem Wasser versorgt werden.

Die Wärmetauscher 43, 44 werden vorzugsweise mit Kühlwasser aus der Brennstoffzelle 10 betrieben. Dieses Ausführungsform ist besonders bevorzugt, da das Kühlwasser die Brennstoffzelle 10 mit der höchsten Temperatur verlässt, welche auf der Eingangsseite der Brennstoffzelle 10 vorliegt. Somit wird das Wasser und somit der mit dem Wasser befeuchtete Sauerstoff bzw. Wasserstoff bereits auf die korrekte Temperatur vorgewärmt. Hierdurch ist keine aktive Regelung notwendig, das System regelt sich passiv selbst.

Zur Inbetriebnahme der Brennstoffzelle können über Inertgaszuführungen 80 Inertgas in den Anodengaskreis und den Kathodengaskreis eingebracht werden und so die gewünschten Bedingungen eingestellt werden.

### Bezugszeichen

- 10: Brennstoffzelle
- 11: Kathodenseite
- 12: Anodenseite
- 15: Ablassventil
- 21: erster Wasserabscheider
- 22: zweiter Wasserabscheider
- 31: Verdichter
- 32: Verdichter
- 41: Verdichter
- 42: Verdichter
- 43: Wärmetauscher
- 44: Wärmetauscher
- 51: erster Befeuchter
- 52: zweiter Befeuchter
- 60: Wasserstofftank
- 70: Sauerstofftank
- 75: Überhitzer
- 80: Inertgaszuführung
- 85: Wasserablass

## Patentansprüche

1. Brennstoffzellenvorrichtung mit wenigstens einer Brennstoffzelle (10), wenigstens einem ersten Wasserabscheider (21), einer ersten Eduktzuführung und wenigstens einem ersten Befeuchter (51), wobei die Brennstoffzellenvorrichtung als Rezirkulationsbrennstoffzellenvorrichtung ausgeführt ist, wobei die Brennstoffzelle (10) eine Eingangsseite und eine Ausgangsseite sowie eine Anodenseite (12) und eine Kathodenseite (11) aufweist, wobei die erste Eduktzuführung mit dem ersten Befeuchter (51) verbunden ist, wobei der erste Befeuchter (51) mit der Eingangsseite der Brennstoffzelle (10) verbunden ist, wobei die Ausgangseite der Brennstoffzelle (10) mit dem ersten Wasserabscheider verbunden ist, wobei die Vorrichtung eine erste Wasserfördervorrichtung aufweist, welche Wasser aus dem ersten Wasserabscheider (21) in den ersten Befeuchter (51) fördert, wobei die Vorrichtung eine kathodenseitige Verbindung aufweist, wobei die kathodenseitige Verbindung zwischen der Ausgangsseite der Kathodenseite (11) der Brennstoffzelle (10) und der Eingangsseite der Kathodenseite (11) der Brennstoffzelle (10) ist, wobei die Vorrichtung eine anodenseitige Verbindung aufweist, wobei die anodenseitige Verbindung eine Verbindung zwischen der Ausgangsseite der Anodenseite (12) der Brennstoffzelle (10) und der Eingangsseite der Anodenseite (12) der Brennstoffzelle (10) ist, wobei in der kathodenseitigen Verbindung der erste Wasserabscheider (21) angeordnet ist, wobei die Vorrichtung einen zweiten Befeuchter (52) auf der Anodenseite aufweist, **dadurch gekennzeichnet, dass** der erste Befeuchter (51) auf der Kathodenseite außerhalb der kathodenseitigen Verbindung angeordnet ist.

2. Brennstoffzellenvorrichtung nach Anspruch 1, **dadurch gekennzeichnet, dass** die erste Wasserfördervorrichtung einen ersten Wärmetauscher (43) aufweist.

3. Brennstoffzellenvorrichtung nach einem der vorstehenden Ansprüche, **dadurch gekennzeichnet, dass** der erste Wärmetauscher (43) mit Kühlwasser der Brennstoffzelle (10) erwärmt wird.

4. Brennstoffzellenvorrichtung nach einem der vorstehenden Ansprüche, **dadurch gekennzeichnet, dass** zwischen dem erste Befeuchter (51) und dem ersten Wasserabscheider (21) eine Wasserrückführung angeordnet ist.

5. Brennstoffzellenvorrichtung nach einem der vorstehenden Ansprüche, **dadurch gekennzeichnet, dass** der erste Befeuchter (51) eine wasserdurchlässige Membran aufweist.

6. Brennstoffzellenvorrichtung nach Anspruch 5, **dadurch gekennzeichnet, dass** der erste Befeuchter (51) eine Membran aus sulfoniertem Tetrafluorethylen-Polymer aufweist.

7. Brennstoffzellenvorrichtung nach einem der Ansprüche 1 bis 4, **dadurch gekennzeichnet, dass** der erste Befeuchter (51) als Wasserbad ausgeführt ist.

8. Brennstoffzellenvorrichtung nach einem der vorstehenden Ansprüche, **dadurch gekennzeichnet, dass** die Vorrichtung eine zweite Wasserfördervorrichtung aufweist, welche Wasser aus dem ersten Wasserabscheider (21) in den zweiten Befeuchter (52) fördert.

9. Verfahren zum Betreiben einer Brennstoffzellenvorrichtung nach einem der vorstehenden Ansprüche, wobei das Verfahren die Verfahrensschritte aufweist:
a) Einleiten eines Eduktgases,
b) Befeuchten eines Eduktgases,
c) Reaktion des Eduktgases in der Brennstoffzelle (10),
d) Abscheiden von Wasser aus dem Produktgasstrom,
**dadurch gekennzeichnet, dass** zum Befeuchten in Schritt b) in Schritt d) abgeschiedenes Wasser verwendet wird.

10. Verfahren nach Anspruch 9, **dadurch gekennzeichnet, dass** zum Aufheizen des Wassers die Abwärme der Brennstoffzelle verwendet wird.

11. Verfahren nach einem der Ansprüche 9 bis 10, **dadurch gekennzeichnet, dass** der Prozess vollständig passiv geregelt wird.

12. Unterseeboot mit einer Brennstoffzellenvorrichtung nach einem der Ansprüche 1 bis 8.

13. Durchführung des Verfahrens nach einem der Ansprüche 9 bis 11 auf einem Unterseeboot nach Anspruch 12.

## Claims

1. Fuel cell device having at least one fuel cell (10), at least one first water separator (21), a first starting-material feed and at least one first humidifier (51), wherein the fuel cell device is designed as a recirculation fuel cell device,
wherein the fuel cell (10) comprises an inlet side and an outlet side, and also an anode side (12) and a cathode side (11), wherein the first starting-material feed is connected to the first humidifier (51), wherein the first humidifier (51) is connected to the inlet side of the fuel cell (10), wherein the outlet side of the fuel cell (10) is connected to the first water separator, wherein the device comprises a first water-conveying device, which conveys water from the first water separator (21) into the first humidifier (51), wherein the device comprises a cathode-side connection, wherein the cathode-side connection is between the outlet side of the cathode side (11) of the fuel cell (10) and the inlet side of the cathode side (11) of the fuel cell (10), wherein the device comprises an anode-side connection, wherein the anode-side connection is a connection between the outlet side of the anode side (12) of the fuel cell (10) and the inlet side of the anode side (12) of the fuel cell (10), wherein the first water separator (21) is arranged in the cathode-side connection, wherein the device comprises a second humidifier (52) on the anode side, **characterized in that** the first humidifier (51) is arranged on the cathode side outside the cathode-side connection.

2. Fuel cell device according to Claim 1, **characterized in that** the first water-conveying device comprises a first heat exchanger (43).

3. Fuel cell device according to either of the preceding claims, **characterized in that** the first heat exchanger (43) is heated by cooling water of the fuel cell (10).

4. Fuel cell device according to one of the preceding claims, **characterized in that** a water return is arranged between the first humidifier (51) and the first water separator (21).

5. Fuel cell device according to one of the preceding claims, **characterized in that** the first humidifier (51) comprises a water-permeable membrane.

6. Fuel cell device according to Claim 5, **characterized in that** the first humidifier (51) comprises a membrane composed of sulphonated tetrafluoroethylene polymer.

7. Fuel cell device according to one of Claims 1 to 4, **characterized in that** the first humidifier (51) is designed as a water bath.

8. Fuel cell device according to one of the preceding claims, **characterized in that** the device comprises a second water-conveying device, which conveys water from the first water separator (21) into the second humidifier (52).

9. Method for operating a fuel cell device according to one of the preceding claims, wherein the method comprises the method steps:
a) introduction of a starting-material gas,
b) humidification of a starting-material gas,
c) reaction of the starting-material gas in the fuel cell (10),
d) separation of water from the product gas stream,
**characterized in that** water separated out in step d) is used for the humidification in step b).

10. Method according to Claim 9, **characterized in that** the waste heat of the fuel cell is used for heating the water.

11. Method according to either of Claims 9 and 10, **characterized in that** the process is regulated completely passively.

12. Submarine having a fuel cell device according to one of Claims 1 to 8.

13. Implementation of the method according to one of Claims 9 to 11 on a submarine according to Claim 12.

## Revendications

1. Dispositif de pile à combustible avec au moins une pile à combustible (10), au moins un premier séparateur d'eau (21), une première arrivée d'éduit et au moins un premier humidificateur (51), dans lequel le dispositif de pile à combustible est réalisé sous la forme d'un dispositif de pile à combustible à recirculation, dans lequel la pile à combustible (10) présente un côté d'entrée et un côté de sortie ainsi qu'un côté d'anode (12) et un côté de cathode (11), dans lequel la première arrivée d'éduit est reliée au premier humidificateur (51), dans lequel le premier humidificateur (51) est relié au côté d'entrée de la pile à combustible (10), dans lequel le côté de sortie de la pile à combustible (10) est relié au premier séparateur d'eau, dans lequel le dispositif présente un premier dispositif de transport d'eau, qui transporte de l'eau du premier séparateur d'eau (21) au premier humidificateur (51), dans lequel le dispositif présente une liaison côté cathode, dans lequel la liaison côté cathode est entre le côté de sortie du côté de cathode (11) de la pile à combustible (10) et le côté d'entrée du côté de cathode (11) de la pile à combustible (10), dans lequel le dispositif présente une liaison côté anode, dans lequel la liaison côté anode est entre le côté de sortie du côté d'anode (12) de la pile à combustible (10) et le côté d'entrée du côté d'anode (12) de la pile à combustible (10), dans lequel le premier séparateur d'eau (21) est disposé dans la liaison côté cathode, dans lequel le dispositif présente un deuxième humidificateur (52) sur le côté d'anode, **caractérisé en ce que** le premier humidificateur (51) est disposé sur le côté de cathode à l'extérieur de la liaison côté cathode.

2. Dispositif de pile à combustible selon la revendication 1, **caractérisé en ce que** le premier dispositif de transport d'eau présente un premier échangeur de chaleur (43).

3. Dispositif de pile à combustible selon l'une quelconque des revendications précédentes, **caractérisé en ce que** le premier échangeur de chaleur (43) est chauffé avec l'eau de refroidissement de la pile à combustible (10).

4. Dispositif de pile à combustible selon l'une quelconque des revendications précédentes, **caractérisé en ce qu'**un retour d'eau est disposé entre le premier humidificateur (51) et le premier séparateur d'eau (21) .

5. Dispositif de pile à combustible selon l'une quelconque des revendications précédentes, **caractérisé en ce que** le premier humidificateur (51) présente une membrane perméable à l'eau.

6. Dispositif de pile à combustible selon la revendication 5, **caractérisé en ce que** le premier humidificateur (51) présente une membrane en polymère de tétrafluoroéthylène sulfoné.

7. Dispositif de pile à combustible selon l'une quelconque des revendications 1 à 4, **caractérisé en ce que** le premier humidificateur (51) est formé par un bain d'eau.

8. Dispositif de pile à combustible selon l'une quelconque des revendications précédentes, **caractérisé en ce que** le dispositif présente un deuxième dispositif de transport d'eau, qui transporte de l'eau du premier séparateur d'eau (21) au deuxième humidificateur (52).

9. Procédé de fonctionnement d'un dispositif de pile à combustible selon l'une quelconque des revendications précédentes, dans lequel le procédé comprend les étapes suivantes:
a) introduire un gaz d'éduit,
b) humidifier un gaz d'éduit,
c) réaction du gaz d'éduit dans la pile à combustible (10),
d) séparer l'eau hors du courant de gaz de produit, **caractérisé en ce que** l'on utilise l'eau séparée à l'étape d) pour l'humidification à l'étape b).

10. Procédé selon la revendication 9, **caractérisé en ce que** l'on utilise la chaleur perdue de la pile à combustible pour chauffer l'eau.

11. Procédé selon une des revendications 9 à 10, **caractérisé en ce que** le processus est régulé de façon entièrement passive.

12. Sous-marin avec un dispositif de pile à combustible selon l'une quelconque des revendications 1 à 8.

13. Mise en oeuvre du procédé selon l'une quelconque des revendications 9 à 11 sur un sous-marin selon la revendication 12.
